# EUROPEAN PATENT APPLICATION

(11) **EP 4 641 087 A1**
(43) Date of publication of application: **29.10.2025**
(21) Application number: 23907093.1
(22) Date of filing: 20.12.2023
(51) Int. Cl.: F23R 3/28, F01D 25/00, F02C 7/00, F02C 7/18, F02C 7/232, F23M 5/04, F23R 3/14, F23R 3/42, F23R 3/50

(54) **COMBUSTOR FOR GAS TURBINE**

(30) Priority: 23.12.2022 JP 2022207280
(71) Applicant: KAWASAKI JUKOGYO KABUSHIKI KAISHA, Kobe-shi, Hyogo 650-8670 (JP)
(72) Inventor: MATSUYAMA, Ryusuke, Kobe-shi, Hyogo 650-8670 (JP); YOSHIDA, Hiroaki, Kobe-shi, Hyogo 650-8670 (JP)
(74) Representative: Dantz, Jan Henning
(86) International application number: PCT/JP2023/045721
(87) International publication number: WO 2024/135733

(57) **Abstract**

A combustor of a gas turbine includes: a panel covering a bulkhead from a combustion chamber while being spaced apart from an outer peripheral surface of a swirler by a radial gap and spaced apart from the bulkhead by an axial gap; and a seal ring that is fitted to the outer peripheral surface of the swirler in the axial gap and is in contact with the panel in an axial direction. The bulkhead includes a cooling air hole that is open toward the axial gap. The panel includes a cooling air hole which is located outside the seal ring in a radial direction, is open to the axial gap, and makes the axial gap communicate with the combustion chamber.

## Description

### Technical Field

The present disclosure relates to a combustor of a gas turbine.

### Background Art

In a combustor of a gas turbine, a swirler is located at an opening of a bulkhead that defines a combustion chamber from an upstream side (see PTL 1, for example).

### Citation List

### Patent Literature

PTL 1: Japanese Patent No. 6475688

### Summary of Invention

### Technical Problem

It is thought that to realize high-temperature combustion in the combustion chamber, the bulkhead is covered with a panel from a side where the combustion chamber is located. However, when a thermal expansion difference is generated between the bulkhead and the panel, stress concentration may be generated at the panel. Moreover, it is preferable that the panel be appropriately cooled.

An object of one aspect of the present disclosure is to, when a bulkhead is covered with a panel, suppress the generation of stress concentration at the panel and suitably cool the panel.

### Solution to Problem

A combustor of a gas turbine according to one aspect of the present disclosure includes: a combustion chamber; a swirler including an outer peripheral surface and an injection port directed to the combustion chamber; a bulkhead fitted to the outer peripheral surface of the swirler; a panel located outside the swirler in a radial direction of the swirler so as to cover the bulkhead from the combustion chamber while being spaced apart from the outer peripheral surface of the swirler in the radial direction by a radial gap and spaced apart from the bulkhead in an axial direction of the swirler by an axial gap, a coefficient of thermal expansion of the panel being smaller than each of a coefficient of thermal expansion of the swirler and a coefficient of thermal expansion of the bulkhead; and a seal ring that is fitted to the outer peripheral surface of the swirler in the axial gap and is in contact with the panel in the axial direction. The bulkhead includes a cooling air hole that is open toward the axial gap. The panel includes a cooling air hole which is located outside the seal ring in the radial direction, is open to the axial gap, and makes the axial gap communicate with the combustion chamber.

### Advantageous Effects of Invention

According to one aspect of the present disclosure, the panel is spaced apart from the swirler by the radial gap and spaced apart from the bulkhead by the axial gap. Therefore, even when a thermal expansion difference is generated between the panel and the swirler and between the panel and the bulkhead, the generation of the stress concentration at the panel can be suppressed. Then, since the seal ring fitted to the outer peripheral surface of the swirler in the axial gap is in contact with the panel, the cooling air in the axial gap is prevented from leaking through the radial gap to the combustion chamber. Therefore, the air does not excessively leak through the axial gap to a combustion region. Thus, the pressure in the axial gap can be kept high, and the cooling air can be supplied through the cooling air hole of the panel to a surface of the panel which is located in the combustion chamber. Therefore, when the bulkhead is covered with the panel, the generation of the stress concentration at the panel is suppressed, and the panel can be suitably cooled.

### Brief Description of Drawings

FIG. 1 is a schematic sectional view of a gas turbine according to an embodiment.
FIG. 2 is a sectional view when viewed from a downstream side in an axial direction of the gas turbine of FIG. 1.
FIG. 3 is a sectional view taken along line III-III of FIG. 2 and showing a combustor of FIG. 2.
FIG. 4 is a sectional view of a fuel injector of FIG. 3.
FIG. 5 is an enlarged sectional view of major components of the fuel injector of FIG. 4.

### Description of Embodiments

Hereinafter, an embodiment will be described with reference to the drawings. An axis Y of a gas turbine 1 is the same as an axis of a combustor 3. A direction in which the axis Y extends is referred to as an axial direction Y. A direction orthogonal to the axis Y of the combustor 3 is referred to as a radial direction Q of the combustor 3. A direction extending around the axis Y is referred to as a circumferential direction C of the combustor 3. Moreover, an axis X of a fuel injector 17 is the same as an axis of a swirler 21. A direction in which the axis X extends is referred to as an axial direction X. The axial direction X is the same as a direction of flow from the fuel injector 17 toward a combustion chamber 16. A direction orthogonal to the axis X of the swirler 21 is referred to as a radial direction R.

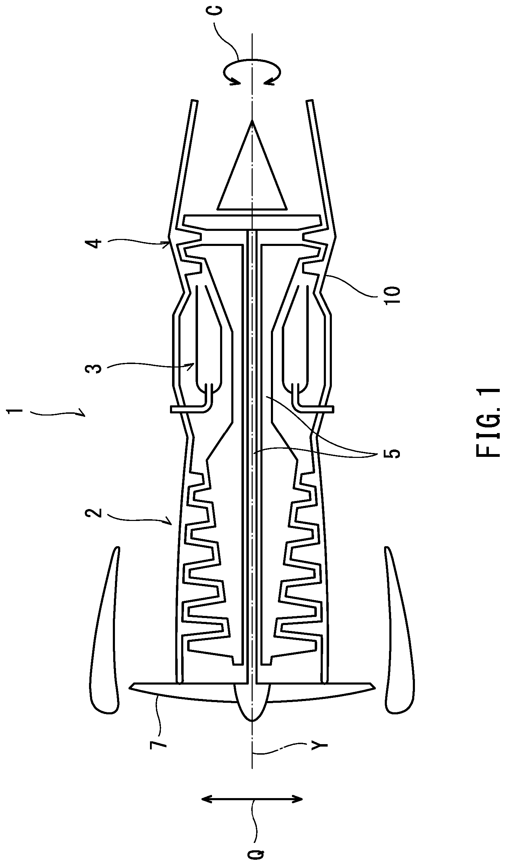

FIG. 1 is a schematic sectional view of the gas turbine 1 according to the embodiment. As shown in FIG. 1, the gas turbine 1 includes a compressor 2, the combustor 3, a turbine 4, a rotating shaft 5, a casing 10, and a fan 7. In the gas turbine 1, air introduced into the casing 10 from the outside is compressed by the compressor 2, and the compressed air compressed by the compressor 2 is guided to the combustor 3. Then, energy of a high-temperature high-pressure combustion gas obtained by combusting fuel together with the compressed air in the combustor 3 is taken out as rotational power in the turbine 4.

The turbine 4 is coupled to the compressor 2 through the rotating shaft 5. An axis of the rotating shaft 5 coincides with the axis Y of the gas turbine 1. The fan 7 is connected to a front end portion of the rotating shaft 5. The rotational power generated by the turbine 4 drives the compressor 2 and the fan 7. There are various types of gas turbines. A turbo fan engine drives a fan by rotational power mainly generated by a turbine and is used as an aircraft engine. FIG. 1 shows the turbo fan engine that is a form of the gas turbine. However, the form of the gas turbine is not limited to this.

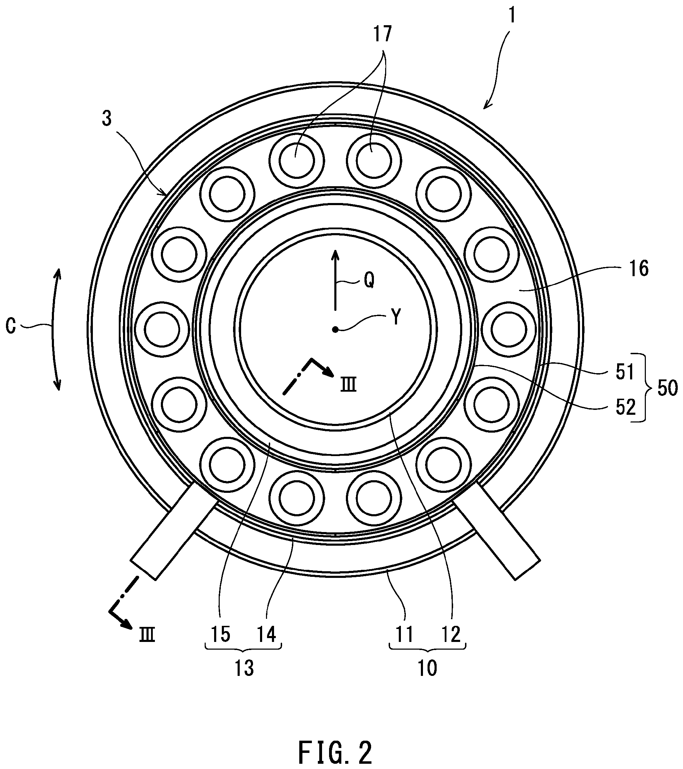

FIG. 2 is a sectional view when viewed from a downstream side in the axial direction Y of the gas turbine 1 of FIG. 1. As shown in FIG. 2, the combustor 3 has a tubular shape. For example, the combustor 3 is an annular combustor having an annular shape surrounding the axis Y of the gas turbine 1. The combustor 3 may be of a type other than the annular type. In the combustor 3, the casing 10 includes: a tubular outer casing 11; and a tubular inner casing 12 concentrically located inside the outer casing 11. An annular internal space is defined between the outer casing 11 and the inner casing 12.

A shell 13 as a combustion liner is located in the annular internal space of the casing 10 so as to be concentric with the casing 10. A radial direction of the shell 13 coincides with the radial direction Q of the combustor 3. An axis of the shell 13 coincides with the axis Y of the combustor 3. A circumferential direction of the shell 13 coincides with the circumferential direction C of the combustor 3. For example, the shell 13 includes a metal material. The shell 13 is made of metal. The shell 13 includes: a tubular outer shell 14; and a tubular inner shell 15 concentrically located inside the outer shell 14. The combustion chamber 16 having an annular shape is defined between the outer shell 14 and the inner shell 15.

The fuel injectors 17 that inject the fuel to the combustion chamber 16 are lined up in the circumferential direction C of the shell 13 along the combustion chamber 16 at an upstream side of the combustion chamber 16. An ignition plug 18 is located at the shell 13. The ignition plug 18 generates a spark for igniting a fuel-air mixture in the combustion chamber 16 at the start of the gas turbine 1. A liner 50 made of a ceramic matrix composite is located in the combustion chamber 16 so as to cover a surface of the shell 13. Specifically, the liner 50 includes: an outer liner 51 covering an inner peripheral surface of the outer shell 14; and an inner liner 22 covering an outer peripheral surface of the inner shell 15.

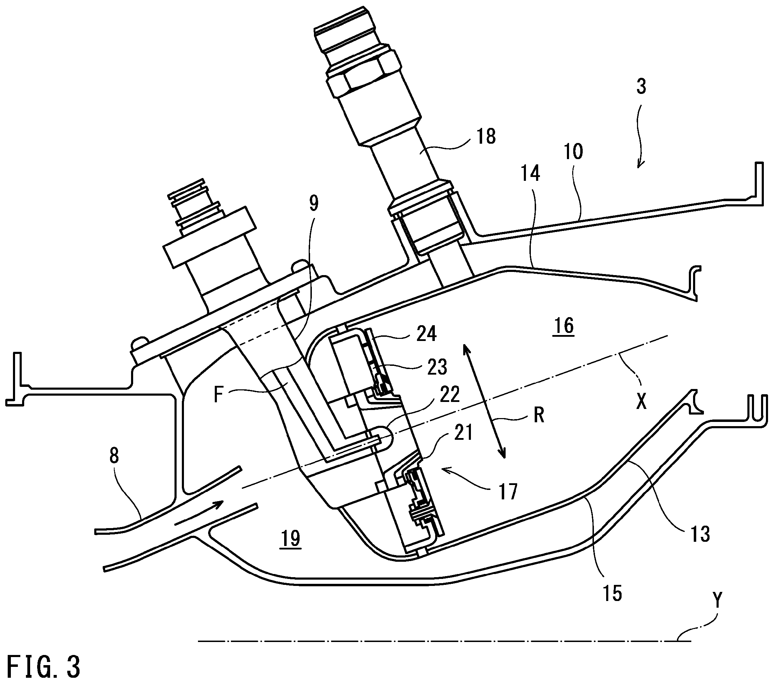

FIG. 3 is a sectional view taken along line III-III of FIG. 2 and showing the combustor 3 of FIG. 2. In FIG. 3, the liner 50 for the shell 13 is not shown. As shown in FIG. 3, a diffuser 8 is located at an upstream portion of the casing 10. The diffuser 8 takes the compressed air, generated by the compressor 2, into the casing 10. The fuel injectors 17 are supported by a stem 9 fixed to the casing 10. Part of the compressed air taken into a space 19 in the casing 10 is supplied to the fuel injectors 17 for combustion. The rest of the compressed air taken into the space 19 in the casing 10 cools an outer surface of the shell 13, and part of the rest of the compressed air is supplied as cooling air into the shell 13 through cooling holes of the shell 13.

Each of the fuel injectors 17 includes the swirler 21, a fuel nozzle 22, a bulkhead 23, and a panel 24. The swirler 21 generates a siwrling flow of the compressed air supplied from the space 19 in the casing 10 and discharges the compressed air to the combustion chamber 16. The fuel nozzle 22 is located inside the swirler 21. The fuel nozzle 22 is supplied with the fuel through a fuel passage F of the stem 9. The bulkhead 23 separates the space 19 from the combustion chamber 16 in the casing 10. The panel 24 covers the bulkhead 23 from the combustion chamber 16. A member that is smaller in a coefficient of thermal expansion than each of the swirler 21 and the bulkhead 23 can be used as the panel 24. In the present embodiment, the panel 24 is a CMC panel 24 including a ceramics composite (CMC).

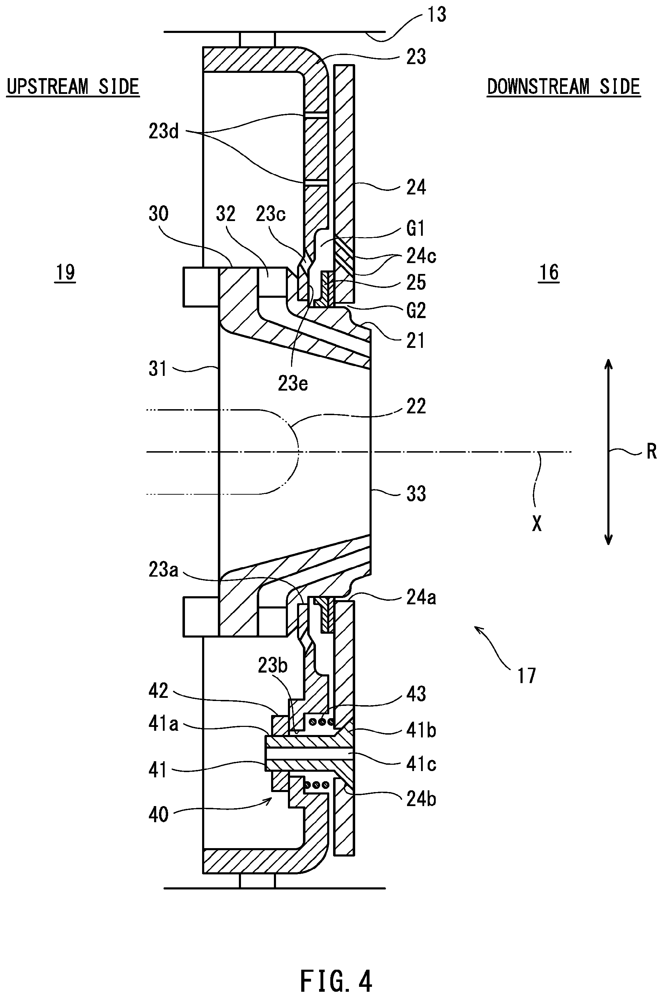

FIG. 4 is a sectional view of the fuel injector 17 of FIG. 3. As shown in FIG. 4, the swirler 21 has a substantially tubular shape and includes an outer peripheral surface 30. For example, the swirler 21 includes a metal material. The swirler 21 is made of metal. The axis X of the swirler 21 extends in a flow direction of the combustion gas in the combustion chamber 16. A side in the axial direction X from the fuel injector 17 toward the combustion chamber 16 is referred to as a downstream side, and its opposite side in the axial direction X is referred to as an upstream side. The swirler 21 includes: an axial inflow port 31 directed to the upstream side in the axial direction X; a radial inflow port 32 directed to the outside in the radial direction R; and an injection port 33 directed to the downstream side in the axial direction.

The bulkhead 23 includes a middle hole 23a in which the swirler 21 is located. The bulkhead 23 has, for example, an annular shape. The bulkhead 23 is fitted to the outer peripheral surface 30 of the swirler 21. For example, the bulkhead 23 includes a metal material. The bulkhead 23 is made of metal. The bulkhead 23 extends in the radial direction R orthogonal to the axial direction X of the swirler 21 and includes a main surface directed in the axial direction X. The bulkhead 23 defines the combustion chamber 16 from the upstream side in the axial direction X. The panel 24 is, for example, an annular plate including a ceramic matrix composite. The panel 24 may be an annular plate including one or more panels. The CMC panel 24 covers the bulkhead 23 from the downstream side in the axial direction X to protect the bulkhead 23 from heat of the combustion chamber 16.

The CMC panel 24 is located outside the swirler 21 in the radial direction R. The CMC panel 24 includes a middle hole 24a in which the swirler 21 is located. The CMC panel 24 is located so as to be spaced apart from the bulkhead 23 in the axial direction X by an axial gap G1. To be specific, the CMC panel 24 is separated from the bulkhead 23. The CMC panel 24 is located so as to be spaced apart from the outer peripheral surface 30 of the swirler 21 in the radial direction R by a radial gap G2. To be specific, the CMC panel 24 is separated from the swirler 21. A seal ring 25 described below in detail is located at the axial gap G1.

The CMC panel 24 is attached to the bulkhead 23 by fixtures 40. The bulkhead 23 includes through holes 23b for the fixtures 40, and the CMC panel 24 includes support holes 24b for the fixtures 40. The fixtures 40 are located at intervals in a circumferential direction around the axis X. The structure of the fixture 40 is not especially limited. As one example, the fixture 40 is an assembly including a support 41, a fixing member 42, and an elastic member 43.

The support 41 is inserted into the support hole 24b of the CMC panel 24 and the through hole 23b of the bulkhead 23 from the downstream side in the axial direction X. The through hole 23b of the bulkhead 23 has such a size as to have a margin with respect to a shaft portion 41a of the support 41. The support 41 includes the shaft portion 41a, a head portion 41b, and an air passage 41c. The shaft portion 41a extends in the axial direction X and is in the through hole 23b of the bulkhead 23. A thread or an engagement groove is located on a portion of an outer peripheral surface of the shaft portion 41a which is located upstream of the bulkhead 23 in the axial direction X.

The head portion 41b is located at an end portion of the shaft portion 41a which is located at the downstream side in the axial direction X. An outer diameter of the head portion 41b is larger than an outer diameter of the shaft portion 41a. An outer peripheral surface of the head portion 41b includes a tapered surface that increases in diameter from the upstream side to the downstream side in the axial direction X. The head portion 41b is located in the support hole 24b of the CMC panel 24. The tapered surface of the outer peripheral surface of the head portion 41b is in contact with a tapered surface of an inner peripheral surface of the support hole 24b. To be specific, the head portion 41b supports the CMC panel 24 from the downstream side in the axial direction X. Instead of including the tapered surfaces in the outer peripheral surface of the head portion 41b and the inner peripheral surface of the support hole 24b, the head portion 41b of the support 41 may be in contact with a surface of the CMC panel 24 which is located at the downstream side in the axial direction X.

The air passage 41c extends inside the support 41 in a longitudinal direction of the support 41 from the shaft portion 41a to the head portion 41b. The air passage 41c makes the space 19 in the casing 10 communicate with the combustion chamber 16. A portion of the air passage 41c which is located at the downstream side in the axial direction X has a truncated cone shape that expands toward the combustion chamber 16. The compressed air in the space 19 in the casing 10 flows through the air passage 41c and is discharged as cooling air to the combustion chamber 16 along a surface of the CMC panel 24 which is located at the downstream side in the axial direction X. The air passage 41c may be omitted.

The fixing member 42 is fixed to the shaft portion 41a of the support 41 at the upstream side of the bulkhead 23 in the axial direction X. An outer shape of the fixing member 42 is larger than the through hole 23b of the bulkhead 23. The fixing member 42 is, for example, a nut that is threadedly engaged with the thread on the outer peripheral surface of the shaft portion 41a but may be a C-shaped clip that is engaged with the engagement groove on the outer peripheral surface of the shaft portion 41a. The elastic member 43 is sandwiched between the bulkhead 23 and the CMC panel 24. The elastic member 43 is, for example, a coil spring but may be a disc spring.

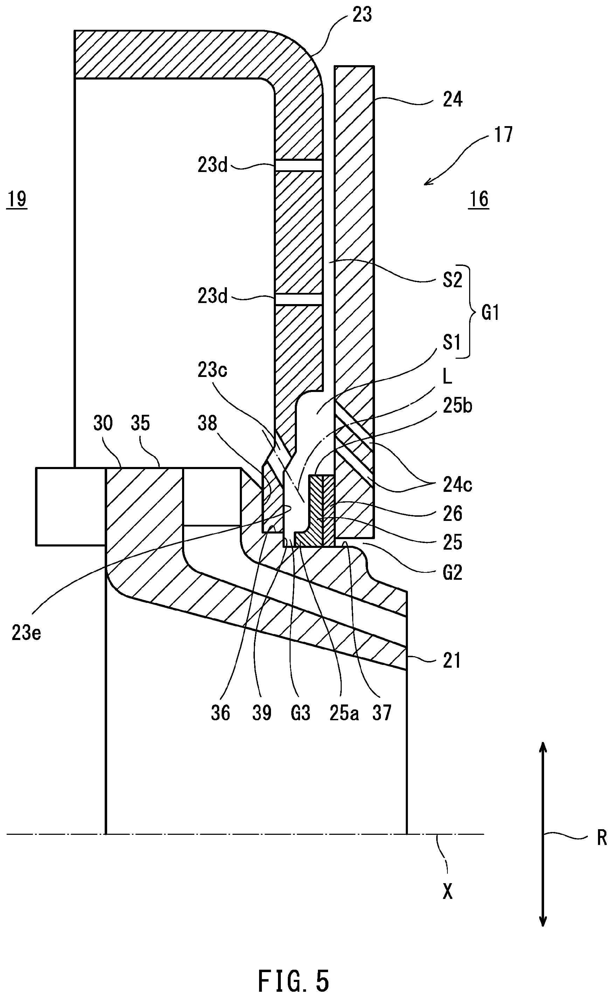

FIG. 5 is an enlarged sectional view of major components of the fuel injector 17 of FIG. 4. As shown in FIG. 5, the outer peripheral surface 30 of the swirler 21 includes a first outer peripheral surface portion 35, a second outer peripheral surface portion 36, and a third outer peripheral surface portion 37. The first outer peripheral surface portion 35 is located at an opposite side to the axial gap G1 across the bulkhead 23.

The second outer peripheral surface portion 36 is located downstream of the first outer peripheral surface portion 35 in the axial direction X. Moreover, the second outer peripheral surface portion 36 may be located inside the first outer peripheral surface portion 35 in the radial direction R and may be smaller in diameter than the first outer peripheral surface portion 35. A first flange surface 38 that connects the first outer peripheral surface portion 35 to the second outer peripheral surface portion 36 is directed to the downstream side in the axial direction X. The bulkhead 23 is fitted to the second outer peripheral surface portion 36. The bulkhead 23 is in contact with the second outer peripheral surface portion 36 and first flange surface 38 of the swirler 21.

The third outer peripheral surface portion 37 is located downstream of the second outer peripheral surface portion 36 in the axial direction X. Moreover, the third outer peripheral surface portion 37 may be located inside the second outer peripheral surface portion 36 in the radial direction R and may be smaller in diameter than the second outer peripheral surface portion 36. A second flange surface 39 that connects the second outer peripheral surface portion 36 to the third outer peripheral surface portion 37 is directed to the downstream side in the axial direction X. The seal ring 25 is fitted to the third outer peripheral surface portion 37. The third outer peripheral surface portion 37 may be the same in diameter as the second outer peripheral surface portion 36.

The seal ring 25 is opposed to the second flange surface 39 of the swirler 21 in the axial direction X and is spaced apart from the second flange surface 39 toward the downstream side in the axial direction X by a gap G3. The seal ring 25 is located so as to be slidable on the third outer peripheral surface portion 37 of the swirler 21 in the axial direction X. For example, the third outer peripheral surface portion 37 has a constant outer diameter in the axial direction X.

When the second outer peripheral surface portion 36 and the third outer peripheral surface portion 37 are continuous with each other and are the same in diameter as each other, the seal ring 25 is opposed to the bulkhead 23 in the axial direction X. In this case, the seal ring 25 may be spaced apart from the bulkhead 23 toward the downstream side in the axial direction X by the gap G3.

The bulkhead 23 includes an inner peripheral portion 23e that is depressed in such a direction as to be away from the CMC panel 24 along the axial direction X. To be specific, the inner peripheral portion 23e of the bulkhead 23 is depressed toward the upstream side in the axial direction X. The axial gap G1 includes: a cooling chamber S1 defined between the inner peripheral portion 23e of the bulkhead 23 and the CMC panel 24; and a clearance space S2 extending from the cooling chamber S1 outward in the radial direction R. The clearance space S2 is smaller in dimension in the axial direction X than the cooling chamber S1.

The bulkhead 23 includes cooling air holes 23c and 23d that make the space 19 in the casing 10 communicate with the axial gap G1. The cooling air hole 23c of the bulkhead 23 is open toward the cooling chamber S1. The cooling air hole 23d of the bulkhead 23 is open toward the clearance space S2. The CMC panel 24 includes a cooling air hole 24c that makes the cooling chamber S1 communicate with the combustion chamber 16. The cooling air hole 24c of the CMC panel 24 is located outside the seal ring 25 in the radial direction R and is open from the cooling chamber S1 toward the combustion chamber 16. For example, the cooling air hole 24c of the CMC panel 24 extends diagonally toward the downstream side in the axial direction X and the inside in the radial direction.

The compressed air in the space 19 in the casing 10 flows through the cooling air hole 23c of the bulkhead 23 into the cooling chamber S1. Since the clearance space S2 is smaller in dimension in the axial direction X than the cooling chamber S1, air pressure in the cooling chamber S1 is kept high. The compressed air in the cooling chamber S1 is discharged through the cooling air hole 24c of the CMC panel 24 to the combustion chamber 16 to cool a surface of the CMC panel 24 which is directed to the combustion chamber 16. The compressed air in the space 19 in the casing 10 is discharged through the cooling air hole 23d of the bulkhead 23 to the clearance space S2. The compressed air discharged through the cooling air hole 23d of the bulkhead 23 to the clearance space S2 collides with the CMC panel 24 to cool the CMC panel 24.

The seal ring 25 is located in the axial gap G1 and is fitted to the third outer peripheral surface portion 37 of the swirler 21. For example, the seal ring 25 includes a metal material. The seal ring 25 is made of metal, but may be made of a material other than the metal. The seal ring 25 includes a tubular portion 25a and a flange portion 25b. The tubular portion 25a is fitted to the third outer peripheral surface portion 37 of the swirler 21. The flange portion 25b projects outward in the radial direction R from an end portion of the tubular portion 25a which is located closer to the CMC panel 24 than to the bulkhead 23. To be specific, the seal ring 25 has an L shape in a sectional view when viewed in the circumferential direction around the axis X. The flange portion 25b may project outward in the radial direction R from the tubular portion 25a, and the seal ring 25 may have a shape other than the L shape in the sectional view when viewed in the circumferential direction around the axis X.

The flange portion 25b of the seal ring 25 is in contact with the CMC panel 24 in the axial direction X. The seal ring 25 is not fixed to the CMC panel 24 and is separable from the CMC panel 24. A thermal barrier coating 26 (TBC) may be located on a surface of the seal ring 25 which is in contact with the CMC panel 24. The thermal barrier coating 26 is, for example, a coating formed by performing thermal spraying of porous ceramic with respect to a base material of the seal ring 25. This reduces heat transferred from the combustion chamber 16 through the CMC panel 24 to the seal ring 25. Instead of locating the thermal barrier coating 26 on the seal ring 25, the thermal barrier coating 26 may be located on a surface of the CMC panel 24 which is in contact with the seal ring 25.

An extended axis L of a discharge port of the cooling air hole 23c of the bulkhead 23 extends toward the downstream side in the axial direction X. Moreover, the extended axis L of the discharge port of the cooling air hole 23c of the bulkhead 23 may extend diagonally toward the inside in the radial direction R, and the seal ring 25 may be located on the extended axis L. In the present embodiment, the flange portion 25b of the seal ring 25 is located on the extended axis L. The compressed air discharged through the cooling air hole 23c of the bulkhead 23 to the cooling chamber S1 collides with the flange portion 25b of the seal ring 25 to cool the seal ring 25. Moreover, since the extended axis L includes a component that extends in the axial direction X toward the CMC panel 24, the compressed air discharged through the cooling air hole 23c presses the seal ring 25 against the CMC panel 24. Therefore, the seal ring 25 is stably in contact with the CMC panel 24.

When the cooling air hole 23c of the bulkhead 23 extends diagonally relative to the axial direction X so as to be directed to the cooling chamber S1 and the inside in the radial direction R, an outlet (discharge port) of the cooling air hole 23c of the bulkhead 23 is located inside an inlet (inflow port) of the cooling air hole 23c of the bulkhead 23 in the radial direction. Thus, a tip portion of the swirler 21 which is located at the downstream side in the axial direction X can be reduced in diameter, and the seal ring 25 can be reduced in diameter. Therefore, an increase in weight of the fuel injector 17 can be suppressed.

According to the above configuration, the CMC panel 24 is spaced apart from the swirler 21, made of metal, by the radial gap G2 and spaced apart from the bulkhead 23, made of metal, by the axial gap G1. Therefore, even when a thermal expansion difference is generated between the metal and the CMC, the generation of the stress concentration at the CMC panel 24 can be suppressed.

Then, since the seal ring 25 fitted to the outer peripheral surface 30 of the swirler 21 in the axial gap G1 is in contact with the CMC panel 24, the cooling air in the axial gap G1 is prevented from leaking through the radial gap G2 to the combustion chamber 16. Therefore, the air does not excessively leak through the axial gap G1 to a combustion region. Thus, the pressure in the cooling chamber S1 can be kept high, and the cooling air can be supplied through the cooling air hole 24c of the CMC panel 24 to a surface of the CMC panel 24 which is located in the combustion chamber 16. Therefore, when the bulkhead 23 is covered with the CMC panel 24, the generation of the stress concentration at the CMC panel 24 is suppressed, and the CMC panel 24 can be suitably cooled.

Moreover, the seal ring 25 is spaced apart from the second flange surface 39 of the swirler 21 in the axial direction X by the gap G3. Therefore, when the seal ring 25, the CMC panel 24, or both of the seal ring 25 and the CMC panel 24 thermally expand, the generation of the stress concentration at the CMC panel 24 can be suitably suppressed. Furthermore, the seal ring 25 is slidable relative to the swirler 21 in the axial direction X. Therefore, the generation of the stress concentration at the CMC panel 24 due to the seal ring 25 can be further suitably suppressed.

The technology of the present disclosure is not limited to the above embodiment. For example, the CMC panel 24 may cover at least part of the bulkhead 23 from the combustion chamber 16. The CMC panel is not limited to a one-piece panel and may be a combination of CMC panel members lined up in the circumferential direction around the axis X. The seal ring 25 may be pressed against the CMC panel 24 by a spring. The seal ring 25 does not have to be spaced apart from the second flange surface 39 of the swirler 21 or the bulkhead 23 while being in surface contact with the CMC panel 24 in the axial direction X. The seal ring 25 is not limited to a seal ring having an L-shaped section, and may have, for example, a flat annular plate shape. The thermal barrier coating 26 may be omitted.

The foregoing has described the embodiment as an example of the technology disclosed in the present application. However, the technology in the present disclosure is not limited to this and is applicable to embodiments in which modifications, replacements, additions, omissions, and the like have been suitably made. Moreover, a new embodiment may be prepared by combining the components described in the above embodiment. For example, some of components or methods in one embodiment may be applied to another embodiment. Some components in an embodiment may be separated from the other components in the embodiment and arbitrarily extracted. Furthermore, the components shown in the attached drawings and the detailed explanations include not only components essential to solve the problems but also components for exemplifying the above technology and not essential to solve the problems.

The following aspects disclose preferred embodiments.

### First Aspect

A combustor of a gas turbine,
the combustor including:
a combustion chamber;
a swirler including an outer peripheral surface and an injection port directed to the combustion chamber;
a bulkhead fitted to the outer peripheral surface of the swirler;
a panel located outside the swirler in a radial direction of the swirler so as to cover the bulkhead from the combustion chamber while being spaced apart from the outer peripheral surface of the swirler in the radial direction by a radial gap and spaced apart from the bulkhead in an axial direction of the swirler by an axial gap, a coefficient of thermal expansion of the panel being smaller than each of a coefficient of thermal expansion of the swirler and a coefficient of thermal expansion of the bulkhead; and
a seal ring that is fitted to the outer peripheral surface of the swirler in the axial gap and is in contact with the panel in the axial direction, wherein:
   the bulkhead includes a cooling air hole that is open toward the axial gap; and
   the panel includes a cooling air hole which is located outside the seal ring in the radial direction, is open to the axial gap, and makes the axial gap communicate with the combustion chamber.

According to this configuration, the panel is spaced apart from the swirler by the radial gap and spaced apart from the bulkhead by the axial gap. Therefore, even when a thermal expansion difference is generated between the panel and the swirler and between the panel and the bulkhead, the generation of the stress concentration at the panel can be suppressed. Then, since the seal ring fitted to the outer peripheral surface of the swirler in the axial gap is in contact with the panel, the cooling air in the axial gap is prevented from leaking through the radial gap to the combustion chamber. Therefore, the air does not excessively leak through the axial gap to a combustion region. Thus, the pressure in the axial gap can be kept high, and the cooling air can be supplied through the cooling air hole of the panel to a surface of the panel which is located in the combustion chamber. Therefore, when the bulkhead is covered with the panel, the generation of the stress concentration at the panel is suppressed, and the panel can be suitably cooled.

### Second Aspect

The combustor according to the first aspect, wherein:
the swirler and the bulkhead include metal; and
the panel include a CMC.

According to this configuration, the coefficient of thermal expansion of the CMC panel is smaller than each of the coefficient of thermal expansion of the swirler made of metal and the coefficient of thermal expansion of the bulkhead made of metal, and the radial gap between the panel and the swirler and the axial gap between the panel and the bulkhead are easily kept. Therefore, the stress concentration at the panel can be further suppressed.

### Third Aspect

The combustor according to the first or second aspect, wherein:
an extended axis of a discharge port of the cooling air hole of the bulkhead includes a component extending in the axial direction toward the panel; and
the seal ring is located on the extended axis.

According to this configuration, the seal ring can be pressed against the panel by the air pressure from the cooling air hole of the bulkhead. Therefore, the contact between the seal ring and the panel can be stabilized. Moreover, the seal ring can be subjected to impingement cooling by the cooling air from the cooling air hole.

### Fourth Aspect

The combustor according to any one of the first to third aspects, wherein the seal ring includes
a tubular portion fitted to the outer peripheral surface of the swirler and
a flange portion projecting outward in the radial direction from an end portion of the tubular portion which is located closer to the panel than to the bulkhead.

According to this configuration, a region occupied by the seal ring is reduced, and this can reduce the weight of the seal ring.

### Fifth Aspect

The combustor according to the fourth aspect, wherein:
an extended axis of a discharge port of the cooling air hole of the bulkhead includes a component extending in the axial direction toward the panel; and
the flange portion of the seal ring is located on the extended axis.

According to this configuration, while reducing the weight of the seal ring by the reduction in the region occupied by the seal ring, the air pressure from the cooling air hole of the bulkhead can be surely applied to the seal ring.

### Sixth Aspect

The combustor according to any one of the first to fifth aspects, wherein:
the outer peripheral surface of the swirler includes
   a first outer peripheral surface portion located at an opposite side to the axial gap across the bulkhead,
   a second outer peripheral surface portion located inside the first outer peripheral surface portion in the radial direction, the bulkhead being fitted to the second outer peripheral surface portion, and
   a third outer peripheral surface portion located inside the first outer peripheral surface portion in the radial direction, the seal ring being fitted to the third outer peripheral surface portion; and
the cooling air hole of the bulkhead extends diagonally relative to the axial direction so as to be directed to the axial gap and the inside in the radial direction.

According to this configuration, the outlet of the cooling air hole of the bulkhead is located inside the inlet of the cooling air hole of the bulkhead in the radial direction. Therefore, the tip portion of the swirler is reduced in diameter, and the seal ring is also reduced in diameter. Thus, the increase in the weight of the combustor can be suppressed.

### Seventh Aspect

The combustor according to any one of the first to sixth aspects, wherein:
the bulkhead includes an inner peripheral portion that is depressed in such a direction as to be away from the panel along the axial direction;
the axial gap includes
   a cooling chamber defined between the inner peripheral portion of the bulkhead and the panel and
   a clearance space that extends outward in the radial direction from the cooling chamber and is smaller in dimension in the axial direction than the cooling chamber; and
the cooling air hole of the bulkhead and the cooling air hole of the panel are open to the cooling chamber.

According to this configuration, although there is the axial gap between the panel and the bulkhead, the air pressure in the cooling chamber to which the cooling air hole is open can be increased.

### Eighth Aspect

The combustor according to any one of the first to seventh aspects, further including a fixture by which the panel is elastically attached to the bulkhead.

According to this configuration, the panel can be attached to the bulkhead while suppressing the generation of the stress at the panel.

### Ninth Aspect

The combustor according to any one of the first to eighth aspects, wherein at least one of the seal ring or the panel includes a thermal barrier coating on a surface where the seal ring and the panel are in contact with each other.

According to this configuration, heat transfer from the panel to the seal ring can be reduced.

### Reference Signs List

- 1: gas turbine
- 3: combustor
- 16: combustion chamber
- 17: fuel injector
- 19: space
- 21: swirler
- 23: bulkhead
- 23c: cooling air hole
- 23e: inner peripheral portion
- 24: CMC panel
- 24c: cooling air hole
- 25a: tubular portion
- 25b: flange portion
- 25: seal ring
- 26: thermal barrier coating
- 30: outer peripheral surface
- 35: first outer peripheral surface portion
- 36: second outer peripheral surface portion
- 37: third outer peripheral surface portion
- 40: fixture
- G1: axial gap
- G2: radial gap
- G3: gap
- S1: cooling chamber
- S2: clearance space
- R: radial direction
- X: axial direction

## Claims

1. A combustor of a gas turbine,
the combustor comprising:
a combustion chamber;
a swirler including an outer peripheral surface and an injection port directed to the combustion chamber;
a bulkhead fitted to the outer peripheral surface of the swirler;
a panel located outside the swirler in a radial direction of the swirler so as to cover the bulkhead from the combustion chamber while being spaced apart from the outer peripheral surface of the swirler in the radial direction by a radial gap and spaced apart from the bulkhead in an axial direction of the swirler by an axial gap, a coefficient of thermal expansion of the panel being smaller than each of a coefficient of thermal expansion of the swirler and a coefficient of thermal expansion of the bulkhead; and
a seal ring that is fitted to the outer peripheral surface of the swirler in the axial gap and is in contact with the panel in the axial direction, wherein:
the bulkhead includes a cooling air hole that is open toward the axial gap; and
the panel includes a cooling air hole which is located outside the seal ring in the radial direction, is open to the axial gap, and makes the axial gap communicate with the combustion chamber.

2. The combustor according to claim 1, wherein:
the swirler and the bulkhead include metal; and
the panel include a CMC.

3. The combustor according to claim 1 or 2, wherein:
an extended axis of a discharge port of the cooling air hole of the bulkhead includes a component extending in the axial direction toward the panel; and
the seal ring is located on the extended axis.

4. The combustor according to any one of claims 1 to 3, wherein the seal ring includes
a tubular portion fitted to the outer peripheral surface of the swirler and
a flange portion projecting outward in the radial direction from an end portion of the tubular portion which is located closer to the panel than to the bulkhead.

5. The combustor according to claim 4, wherein:
an extended axis of a discharge port of the cooling air hole of the bulkhead includes a component extending in the axial direction toward the panel; and
the flange portion of the seal ring is located on the extended axis.

6. The combustor according to any one of claims 1 to 5, wherein:
the outer peripheral surface of the swirler includes
a first outer peripheral surface portion located at an opposite side to the axial gap across the bulkhead,
a second outer peripheral surface portion located inside the first outer peripheral surface portion in the radial direction, the bulkhead being fitted to the second outer peripheral surface portion, and
a third outer peripheral surface portion located inside the first outer peripheral surface portion in the radial direction, the seal ring being fitted to the third outer peripheral surface portion; and
the cooling air hole of the bulkhead extends diagonally relative to the axial direction so as to be directed to the axial gap and the inside in the radial direction.

7. The combustor according to any one of claims 1 to 6, wherein:
the bulkhead includes an inner peripheral portion that is depressed in such a direction as to be away from the panel along the axial direction;
the axial gap includes
a cooling chamber defined between the inner peripheral portion of the bulkhead and the panel and
a clearance space that extends outward in the radial direction from the cooling chamber and is smaller in dimension in the axial direction than the cooling chamber; and
the cooling air hole of the bulkhead and the cooling air hole of the panel are open to the cooling chamber.

8. The combustor according to any one of claims 1 to 7, further comprising a fixture by which the panel is elastically attached to the bulkhead.

9. The combustor according to any one of claims 1 to 8, wherein at least one of the seal ring or the panel includes a thermal barrier coating on a surface where the seal ring and the panel are in contact with each other.
